# FASCICULE DE BREVET EUROPEEN

(11) **EP 1 901 637 B1**
(45) Date de publication et mention de la délivrance du brevet: **19.11.2008**
(21) Numéro de dépôt: 06755428.7
(22) Date de dépôt: 18.04.2006
(51) Int. Cl.: A47J 31/06, A47J 31/46

(54) **MACHINE A CAFE COMPORTANT UN DISPOSITIF DE CONFECTION DE MOUSSE**
KAFFEEMASCHINE MIT EINER SCHAUMHERSTELLUNGSVORRICHTUNG
COFFEE MACHINE PROVIDED WITH A FOAM PRODUCING DEVICE

(30) Priorité: 04.05.2005 FR 0504579
(43) Date de publication de la demande: 26.03.2008
(73) Titulaire: SEB S.A., 69132 Ecully Cedex (FR)
(72) Inventeur: HIRON, Frédéric, 72130 Saint Ouen de Mimbre (FR)
(74) Mandataire: Kiehl, Hubert
(86) Numéro de dépôt international: PCT/FR2006/000864
(87) Numéro de publication internationale: WO 2006/120314

(56) Documents cités:
- EP-A- 1 498 059
- WO-A-00/07488
- WO-A-20/04100739
- US-A- 5 711 880
- US-A1- 2005 076 783

## Description

La présente invention se rapporte à une machine à café comportant un générateur d'eau chaude, une chambre d'infusion destinée à recevoir un produit à infuser et alimentée par ledit générateur, au moins une sortie de distribution dé l'infusion, et un dispositif de confection de mousse interposé entre ladite chambre d'infusion et ladite sortie de distribution et comportant au moins deux orifices de sortie, de section adaptée, disposés l'un par rapport à l'autre de manière à créer en sortie respectivement au moins deux jets d'infusion qui entrent en collision l'un avec l'autre en formant de la mousse.

On connaît du document US-A-5 711 880 un support de produit à infuser qui présente un fond circulaire délimitant la partie inférieure d'une chambre d'infusion, lorsqu'il est placé dans une machine à café. Le fond de ce support présente des orifices calibrés formant des canaux adaptés pour créer des jets d'infusion. Les orifices du support sont agencés par paires de manière à se faire face. L'infusion traversant une paire de ces orifices forme deux jets de liquide dirigés l'un contre l'autre qui entrent en collision en formant entre eux un angle proche de 180 degrés. Il est indiqué que la collision des jets sous cet angle est particulièrement favorable pour la confection de mousse.

Toutefois, le dispositif de confection de mousse ainsi réalisé présente différents inconvénients principalement liés au fait que celui-ci est intimement lié au support de produit à infuser.

Le support de produit à infuser doit en effet remplir des fonctions qui sont différentes du dispositif de confection de mousse, comme par exemple jouer le rôle de filtre si le produit à infuser se présente sous forme de mouture en vrac, ou assurer une simple fonction de support tout en permettant un passage de l'infusion à travers celui-ci si le produit à infuser se présente sous forme d'une dose de mouture emballée dans un sachet de papier filtre, généralement appelée dosette. Le support de produit à infuser a également pour fonction de définir le volume et la forme géométrique de la chambre d'infusion pour s'adapter à la quantité d'infusion à préparer ou au type de dosette à recevoir ; en effet, il existe actuellement des machines dites "à café" qui peuvent non seulement préparer du café à partir de dosette ou de mouture de café, mais également d'autres types d'infusion, comme par exemple du thé, une boisson chocolatée, un lait chaud ou un mélange de ces produits. Il est donc nécessaire de concevoir des supports de produit à infuser présentant des caractéristiques différentes pour s'adapter notamment à la nature et au volume de ces produits. Dès lors, la conception unitaire du support et du dispositif de confection de mousse tel que décrit dans le document US-A-5 711 880 s'avère inappropriée. De plus, il peut exister un besoin pour utiliser un support de produit à infuser présentant des caractéristiques données avec ou sans dispositif de confection de mousse selon le type de boisson que l'on veut préparer. Le document WO-2004/100739 décrit une machine à café avec un dispositif de confection de mousse*.*

La Demanderesse a donc conclu qu'il existait un besoin pour dissocier les fonctions de support de produit à infuser et de confection de mousse, étant entendu que le dispositif de confection de mousse doit être placé au-delà de la chambre d'infusion pour traiter l'infusion liquide préparée dans la chambre. Toutefois, un agencement du dispositif de confection de mousse en aval de la chambre d'infusion nécessite de prendre en considération l'espace disponible pour ce dispositif, et notamment pour agencer les orifices en regard l'un de l'autre tout en tenant compte de l'alimentation en infusion de ces orifices. Ceci entraîne donc une contrainte de réalisation supplémentaire, surtout si le dispositif de confection de mousse doit être intégré dans un porte-filtre de dimensions standardisées ou destiné à recevoir une quantité de produit à infuser particulièrement importante.

D'autre part, il est également nécessaire de prendre en considération l'écoulement de l'infusion après le dispositif de confection de mousse, à partir duquel la pression de l'infusion est considérablement diminuée, sensiblement égale à la pression atmosphérique pour une machine à faible pression, et l'écoulement est obtenu essentiellement par gravité. En effet, une accumulation de l'infusion ou un écoulement insuffisant peuvent entraîner un encrassement prématuré des conduits, surtout dans le cas de boissons contenant du lait.

La présente invention a donc pour but de réaliser un dispositif de confection de mousse du type à collision de jets d'infusion, qui soit d'un faible encombrement tout en procurant un écoulement satisfaisant de l'infusion.

A cet effet, la présente invention a pour objet une machine à café du type précité, caractérisée en ce que les au moins deux orifices de sortie sont orientés l'un par rapport à l'autre suivant un angle d'environ 90 degrés, au moins un premier orifice de sortie étant orienté verticalement et au moins un deuxième orifice de sortie étant orienté horizontalement et agencé, par rapport audit premier orifice de sortie, de manière à ce que la collision des jets d'infusion soit située sous ledit premier orifice.

Ainsi, les orifices forment un angle plus fermé et, par conséquent, les entrées de ceux-ci sont rapprochées l'une de l'autre. Les sorties créant les jets peuvent également être rapprochées car il n'y a aucun risque que le jet d'une des sorties ne gêne ou bloque le jet de l'autre sortie, voire que le jet d'infusion créé par un orifice pénètre en partie dans l'autre orifice. Par ailleurs, contrairement à ce que l'on pouvait attendre, le fait que les jets s'interceptent sensiblement à angle droit a un effet favorable significatif sur la formation de mousse.

De plus, la disposition relative des orifices fait que l'infusion mousseuse conserve après le point de collision une composante de mouvement dirigée vers la sortie de distribution, bien qu'elle se présente sous forme atomisée après ce point. Son écoulement par gravité vers la sortie de distribution est ainsi favorisé.

Dans des modes de réalisation préférés de l'invention, on peut avoir recours en outre à l'une et/ou à l'autre des dispositions suivantes :
- la machine comporte en outre un porte-filtre amovible comprenant une coupelle de réception du produit à infuser, et une ouverture de sortie de l'infusion, le dispositif de confection de mousse étant agencé à l'intérieur du porte-filtre, entre la coupelle et l'ouverture de sortie du porte-filtre ;
- le porte-filtre comporte une pipe d'écoulement communiquant avec l'ouverture de sortie et présentant une extrémité libre formant la sortie de distribution de l'infusion, le dispositif de confection de mousse étant agencé à l'intérieur de la pipe du porte-filtre ;
- le dispositif de confection de mousse comprend un corps dans lequel sont pratiqués les deux orifices de sortie ;
- au moins un joint d'étanchéité est agencé entre le corps et la paroi intérieure de la pipe d'écoulement ;
- les orifices de sortie du dispositif de confection de mousse sont alimentés en infusion par une chambre collectrice commune ; et
- les orifices de sortie du dispositif de confection de mousse débouchent dans une chambre de collision des jets qui communique avec la sortie de distribution.

D'autres caractéristiques et avantages de l'invention ressortiront de la description qui va suivre, donnée à titre d'exemple non limitatif, en référence aux dessins annexés dans lesquels :
- la figure 1 est une vue en coupe schématique d'une machine à café équipée d'un porte-filtre comportant une dosette de produit à infuser et un dispositif de confection de mousse selon l'invention ;
- la figure 2 est une vue éclatée du porte-filtre représenté à la figure 1 ;
- la figure 3 est une vue partielle agrandie du porte-filtre représenté à la figure 1. -

Sur les différentes figures, on a conservé des références identiques pour désigner des éléments identiques ou similaires.

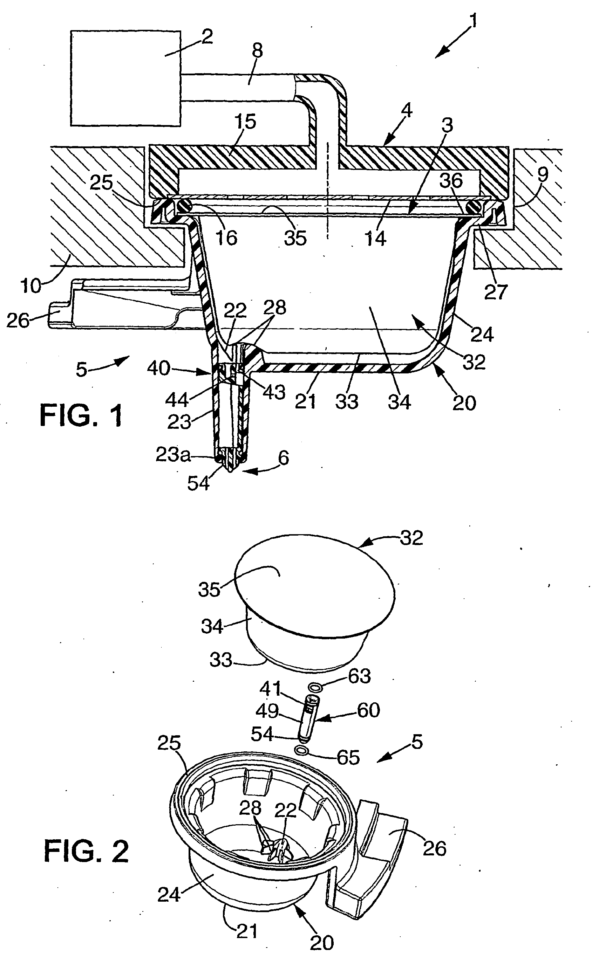

A la figure 1, est schématiquement représentée une machine à café 1 comprenant un générateur d'eau chaude 2, une chambre d'infusion 3 délimitée dans le mode de réalisation représenté par une douchette 4 et un porte-filtre 5, et une sortie de distribution 6 de l'infusion.

Le générateur d'eau chaude 2 peut être de tout type connu dans les machines à café, mais il s'agit préférentiellement d'une chaudière chauffée électriquement comprenant un dispositif adapté pour délivrer l'eau chaude sous une faible pression, c'est-à-dire une pression de l'ordre de deux bars. Le générateur 2 est relié à la douchette 4 par un conduit 8 d'alimentation en eau chaude.

La chambre d'infusion 3 est délimitée dans sa partie supérieure par la douchette 4, et latéralement, ainsi que dans sa partie inférieure, par le porte-filtre 5. Le porte-filtre 5 repose dans un logement 9 formé dans une première partie 10 du boîtier de la machine à café 1, tandis que la douchette 4 est solidaire d'une deuxième partie du boîtier non représentée, mobile par rapport à la première partie 10, et de préférence articulée par rapport à celle-ci, afin de fournir un accès à la chambre d'infusion 3.

La douchette 4 comprend un disque métallique perforé 14 surmonté d'un couvercle 15 dans lequel débouche le conduit 8 d'alimentation en eau chaude, et un joint d'étanchéité annulaire 16 adapté pour assurer l'étanchéité entre la douchette 4 et le porte-filtre 5.

Le porte-filtre 5 est formé d'une coupelle 20 qui présente un fond 21, une paroi latérale annulaire 24 s'étendant à partir du fond 21 jusqu'à un pourtour supérieur 25 contre lequel vient en appui le couvercle 15 de la douchette 4, et une poignée de préhension 26. La paroi annulaire 24 présente à proximité du pourtour supérieur 25 un épaulement radialement extérieur 27.

Le fond 21 dé la coupelle 20 présente une ouverture 22 qui débouche dans une pipe d'écoulement 23 s'étendant verticalement. La pipe d'écoulement 23 présente une extrémité libre 23a qui forme l'ouverture de sortie de l'infusion du porte-filtre 5. On notera la présence de nervures 28 s'étendant vers le haut à partir du fond 21 et agencées radialement par rapport à l'ouverture 22 dans une zone périphérique de cette ouverture.

La coupelle 20 du porte-filtre 5 reçoit une dosette 32 de produit à infuser. La dosette 32 est une poche souple en papier filtre contenant le produit à infuser. Dans le cas présent, il s'agit d'une dosette destinée à la préparation d'un café au lait, aussi appelé "creamy". Dans ce but, elle contient de la mouture de café et du lait en poudre en quantité importante, étant donné qu'un café "creamy" représente un volume de boisson par personne relativement élevé, très nettement supérieur à celui d'un café de type "espresso". La dosette 32 présente un fond plat 33 à partir duquel s'étend un corps 34 légèrement conique jusqu'à une face supérieure plane circulaire 35 en papier filtre. La face supérieure 35 de la dosette 32 forme une collerette périphérique annulaire 36 par rapport au corps 34. La collerette 36 est pressée contre le rebord 27 de la coupelle 20 par le joint d'étanchéité 16 de la douchette 4 dans le mode de réalisation schématiquement représenté à la figure 1.

La dosette 32 est supportée en partie par la paroi annulaire 24 de la coupelle 20, qui présente une conicité sensiblement identique à celle du corps 34 de la dosette, ainsi que par les nervures 28 de la coupelle qui viennent en appui contre le fond 33 de la dosette en créant localement un creux sur celui-ci, et éventuellement par le fond 21 de la coupelle contre lequel peut venir en contact le fond 33 de la dosette, si ce dernier vient à être déformé sous l'effet du passage de l'infusion. Ainsi, dans le mode de réalisation représenté à la figure 1, la chambre d'infusion 3 est délimitée dans sa partie inférieure par le sommet des nervures 28 de la coupelle 20 et le fond 21 lui-même. Le fond 21 de la coupelle 20 a également pour fonction de collecter l'infusion et de diriger celle-ci vers l'ouverture 22. Toutefois, il est parfaitement envisageable que le porte-filtre 5 présente un support de produit à infuser, distinct du fond 21 de la coupelle 20, et par exemple réalisé par une plaque perforée s'étendant entre la paroi annulaire 24 de la coupelle et à distance du fond 21 de celle-ci. Dans ce cas, c'est la plaque perforée et la partie supérieure de la coupelle s'étendant à partir de la plaque, qui constituent une coupelle de réception du produit à infuser, le fond 21 de la coupelle 20 n'ayant alors que pour fonction de collecter l'infusion.

On notera que le porte-filtre 5 est monté amovible dans le logement 9 de la première partie 10 du boîtier. Une fois la douchette 4 dégagée du logement 9, la poignée 26 du porte-filtre 5 permet de dégager celui-ci du logement 9, contre lequel il repose par le rebord radial 27, en effectuant un mouvement vers le haut. Ce montage amovible du porte-filtre 5 dans la machine à café 1 s'avère très pratique et est demandé par de nombreux utilisateurs. En effet, il permet de prendre en main le porte-filtre pour mettre en place plus facilement une dosette, et surtout il permet de jeter la dosette usagée sans avoir à toucher celle-ci, par exemple en retournant le porte-filtre 5 au-dessus d'une poubelle. De plus, le montage amovible du porte-filtre permet de placer dans une même machine à café des porte-filtre présentant des dimensions extérieures identiques, mais avec une structure intérieure différente pour préparer différentes infusions à l'aide de dosettes de géométrie différente ou éventuellement de produit à infuser conditionné en vrac.

Dans le mode de réalisation représenté à la figure 1, l'extrémité libre 23a de la pipe d'écoulement 23 forme la sortie de distribution 6 de l'infusion, de sorte que dans cet exemple, l'ouverture de sortie du porte-filtre 5 et la sortie de distribution 6 sont confondues. Il est bien entendu envisageable que l'infusion s'écoulant par l'ouverture de sortie du porte-filtre 5 soit recueillie par une autre partie de la machine à café pour être dirigée vers une sortie de distribution distante par l'intermédiaire de conduits. Toutefois, le fait que la sortie de distribution 6 soit formée par l'extrémité 23a de la pipe d'écoulement 23, permet de limiter au porte-filtre 5 les parties de la machine éventuellement souillées par l'infusion. Or, du fait de son montage amovible dans la première partie 10 du boîtier, le porte-filtre 5 est particulièrement aisé à nettoyer.

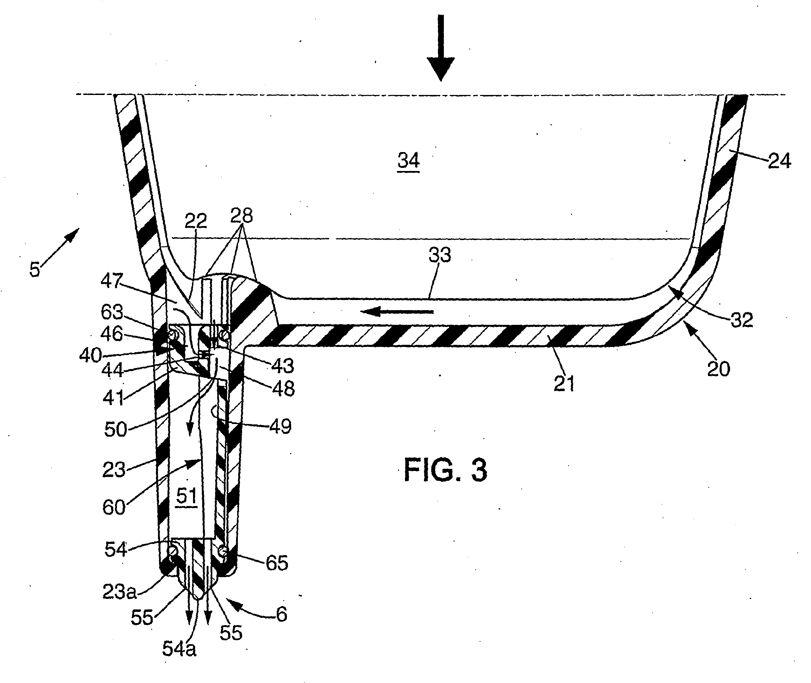

Un dispositif de confection de mousse 40 est agencé à l'intérieur de la pipe 23 du porte-filtre amovible 5. Comme visible à la figure 3, le dispositif de confection de mousse 40 comporte un corps 41 réalisé en matière plastique qui comporte un premier orifice 43 et un deuxième orifice 44, tous deux réalisés sous forme de trous cylindriques traversants. L'infusion traversant la dosette 32 est collectée par le fond 21 de la coupelle 20 et est ensuite dirigée vers l'ouverture 22 de la coupelle 20. Puis, l'infusion sort à travers les deux orifices (43, 44). Ces orifices de sortie (43, 44) présentent une section adaptée en fonction du débit et de la pression de l'infusion, de manière à ce que l'infusion sorte de ceux-ci sous forme de fins jets de liquide. Comme on peut le voir sur la figure 3, les deux orifices (43, 44) sont disposés l'un par rapport à l'autre de sorte que les jets d'infusion créés entrent en collision l'un avec l'autre en formant de la mousse. Plus particulièrement, les deux orifices (43, 44) sont situés dans un même plan, mais orientés l'un par rapport à l'autre suivant un angle de 90 degrés, de sorte que les jets créés s'interceptent perpendiculairement l'un à l'autre.

Le premier orifice 43 est orienté verticalement ; le jet d'infusion sortant du premier orifice 43 est donc dirigé vers le bas, c'est-à-dire globalement en direction de l'extrémité libre 23a de la pipe 23 et de la sortie de distribution 6. Le deuxième orifice 44 est orienté horizontalement, mais situé sous le premier orifice 43, de sorte que la collision des jets d'infusion a lieu sous le premier orifice 43. Cette disposition des orifices (43, 44) fait que l'infusion mousseuse conserve après le point de collision une composante de mouvement dirigée vers la sortie de distribution 6, bien qu'elle se présente sous forme atomisée après ce point. Son écoulement par gravité vers la sortie de distribution 6 est ainsi favorisé.

De plus, par cette disposition des orifices (43, 44), le jet d'infusion vertical sortant de l'orifice 43 sous l'effet de la pression et de la gravitation, présente une vitesse légèrement plus élevée que celle du jet d'infusion horizontal qui, lui, sort de l'orifice 44 uniquement sous l'effet de la pression ; cette différence de vitesses entre les deux jets d'infusion, respectivement vertical et horizontal, a pour avantage de favoriser notablement la formation de mousse. Il s'avère également que cette disposition des deux orifices (43, 44) est favorable pour l'élimination des traces d'infusion qui peuvent subsister après la préparation d'une boisson, élimination qui est par exemple obtenue par envoi d'un jet de vapeur dans la chambre d'infusion. Bien entendu, les orientations verticale et horizontale doivent être considérées lorsque le dispositif de confection de mousse et la machine sont en configuration d'utilisation, et qu'une inclinaison limitée par rapport à ces directions est possible tout en gardant les avantages mentionnés ci-dessus.

Comme illustré à la figure 3, le corps 41 présente un puits 46 débouchant vers l'ouverture 22 du fond 21 de la coupelle 20, qui présente une section très nettement supérieure à la section du deuxième orifice 44. Le puits 46 délimite avec la portion de la pipe 23 s'étendant jusqu'à l'ouverture 22 et les nervures 28, un espace dégagé dans lequel l'infusion est collectée pour alimenter le premier orifice 43 et le deuxième orifice 44. La chambre collectrice 47 ainsi formée permet d'alimenter chacun des deux orifices (43, 44) sous une pression identique, du fait qu'il n'y a pas de perte de charge entre l'entrée du premier orifice 43 et l'entrée du deuxième orifice 44. Ceci favorise l'obtention d'une collision des jets nominale, même si la dosette 32 est plus ou moins correctement placée dans le porte-filtre 5.

Les deux orifices (43, 44) débouchent dans une chambre de collision 48, figure 3, délimitée par le corps 41, la pipe 23 et le sommet d'une aile 49 qui s'étend le long de la paroi intérieure de la pipe 23. Une ouverture 50 ménagée entre le sommet de l'aile 49 et le corps 41 permet la communication de la chambre de collision 48 avec la sortie de distribution 6. On notera que l'ouverture '50 de la chambre de collision 48 présente une section très nettement supérieure à la section des orifices (43, 44) car la chambre 48 ne doit pas se remplir d'infusion. En effet, pour que la collisions des jets entraîne la formation de fines bulles dans l'infusion, il est préférable que de l'air soit présent dans la chambre de collision 48.

Il s'avère que le fait de prévoir une chambre de collision 48 relativement fermée, ainsi que la collision des jets selon un angle d'environ 90 degrés, favorise notablement la création d'une fine mousse.

Un espace libre 51 (figure 3) situé sous le corps 41 et au-dessus d'un organe 54 détaillé ci-après, et délimité latéralement par la pipe 23 et l'aile 49, constitue une réserve d'air pour la chambre de collision 48. L'infusion atomisée dans la chambre de collision 48 traverse l'espace libre 51 essentiellement en s'écoulant par gravité le long des parois verticales de cet espace.

Comme le montre la figure 3, l'organe 54 est agencé à l'intérieur de l'extrémité libre 23a de la pipe 23 et forme avec celle-ci la sortie de distribution 6. L'organe de sortie 54 présente globalement la forme d'un bouchon comportant des canaux verticaux 55 se présentant sous forme de trous traversants cylindriques allongés. La section totale de l'ensemble des canaux 55 est supérieure à la section totale des orifices de sortie (43, 44) du dispositif de confection de mousse 40, afin que l'infusion sortant de ces canaux 55 ne soit pas sous forme de jets puissants qui pourraient créer des éclaboussures au niveau de la sortie de distribution 6. Toutefois, leur section totale ne doit pas être trop importante, afin qu'ils soient remplis par l'infusion lorsque celle-ci les traverse. Ainsi, et du fait de l'allongement des canaux 55, on obtient un écoulement régulier de l'infusion mousseuse à la sortie de distribution 6.

L'aile 49 relie le corps 41 du dispositif de confection de mousse 40 à l'organe de sortie 54, de sorte que l'ensemble de ces trois éléments (41, 49, 55) ne forme qu'une seule pièce désignée par la référence 60 sur la figure 2.

La pièce 60 formant ainsi le corps 41 du dispositif de confection de mousse 40 et l'organe de sortie 54, est montée amovible à l'intérieur de la pipe 23 et s'étend sur sensiblement toute la hauteur de celle-ci, le corps 41 étant situé dans la portion supérieure de la pipe 23.

L'organe de sortie 54 présente une extrémité 54a qui fait saillie par rapport à l'extrémité libre 23a de la pipe 23. Ainsi, en exerçant une pression avec le doigt sur l'extrémité 54a, la pièce 60 est repoussée vers l'ouverture 22 du fond de la coupelle 20 et peut ensuite être facilement retirée du porte-filtre. Le montage amovible de la pièce 60 est avantageux pour nettoyer celle-ci, et plus particulièrement les deux orifices (43, 44) du dispositif de confection de mousse 40. On notera que le fait de réaliser le corps 41 du dispositif de confection de mousse en une seule pièce avec l'aile 49 et l'organe de sortie 54, permet d'obtenir une pièce 60 qui présente des dimensions suffisamment importantes pour être aisément manipulée, bien que le dispositif de confection de mousse 40 est de taille réduite. La pièce 60 est de préférence moulée par injection de matière plastique.

Un premier joint torique 63, figure 3, est disposé dans une rainure périphérique du corps 41 et vient en contact avec la paroi intérieure de la pipe 23, de manière à assurer l'étanchéité entre ces deux éléments. En effet, une fuite d'infusion entre la pipe 23 et le corps 41 diminuerait le débit traversant les orifices de sortie (43, 44) et serait défavorable à la formation de mousse.

De manière analogue, un joint d'étanchéité 65 entoure l'organe de sortie 54 et vient en contact avec la paroi intérieure de la pipe 23, de manière à assurer l'étanchéité entre ces deux éléments et éviter l'apparition de traces d'infusion à l'extrémité libre 23a de la pipe.

Le mode de réalisation décrit ci-dessus n'est nullement limitatif, et il est notamment possible de prévoir plus de deux orifices de sortie pour le dispositif de confection de mousse, étant entendu qu'au moins deux de ces orifices doivent être orientés sensiblement à 90 degrés. Il est également possible d'agencer le dispositif de confection de mousse dans un porte-filtre présentant une structure différente, par exemple avec un support perforé adapté à soutenir une dosette ou à recevoir de la mouture en vrac. Un montage sensiblement différent du porté-filtre dans la machine à café peut également être conçu.

## Revendications

1. Machine à café comportant un générateur d'eau chaude (2), une chambre d'infusion (3) destinée à recevoir un produit à infuser et alimentée par ledit générateur (2), au moins une sortie de distribution (6) de l'infusion, et un dispositif de confection de mousse (40) interposé entre ladite chambre d'infusion (3) et ladite sortie de distribution (6) et comportant au moins deux orifices de sortie (43, 44), de section adaptée, disposés l'un par rapport à l'autre de manière à créer en sortie respectivement au moins deux jets d'infusion qui entrent en collision l'un avec l'autre en formant de la mousse, **caractérisée en ce que** les au moins deux orifices de sortie (43, 44) sont orientés l'un par rapport à l'autre suivant un angle d'environ 90 degrés, au moins un premier orifice de sortie (43) étant orienté verticalement et au moins un deuxième orifice de sortie (44) étant orienté horizontalement et agencé, par rapport audit premier orifice de sortie (43), de manière à ce que la collision des jets d'infusion soit située sous ledit premier orifice.

2. Machine à café selon la revendication 1, comportant en outre un porte-filtre amovible (5) comprenant une coupelle (20) de réception du produit à infuser, et une ouverture de sortie (23a) de l'infusion, **caractérisée en ce que** le dispositif de confection de mousse (40) est agencé à l'intérieur du porte-filtre (5), entre la coupelle (20) et l'ouverture de sortie (23a) du porte-filtre.

3. Machine à café selon la revendication 2, dans laquelle le porte-filtre (5) comporte une pipe d'écoulement (23) communiquant avec l'ouverture de sortie (23a) et présentant une extrémité libre formant la sortie de distribution (6) de l'infusion, **caractérisée en ce que** le dispositif de confection de mousse (40) est agencé à l'intérieur de la pipe (23) du porte-filtre (5).

4. Machine à café selon l'une quelconque des revendications précédentes, **caractérisée en ce que** le dispositif de confection de mousse (40) comprend un corps (41) dans lequel sont pratiqués les deux orifices de sortie (43, 44), ledit corps (41) étant réalisé en une seule pièce de matière plastique moulée.

5. Machine à café selon les revendications 3 et 4, **caractérisée en ce qu'**au moins un joint d'étanchéité (63; 65) est agencé entre le corps (41) et la paroi intérieure de la pipe d'écoulement (23).

6. Machine à café selon l'une quelconque des revendications précédentes, **caractérisée en ce que** les orifices de sortie (43, 44) du dispositif de confection de mousse (40) sont alimentés en infusion par une chambre collectrice commune (47).

7. Machine à café selon l'une quelconque des revendications précédentes, **caractérisée en ce que** les orifices de sortie (43, 44) du dispositif de confection de mousse (40) débouchent dans une chambre de collision des jets (48) qui communique avec la sortie de distribution (6), de manière à ce que l'infusion s'écoule par gravité depuis ladite chambre de collision (48) vers ladite sortie de distribution (6).

## Claims

1. Coffee machine comprising a hot-water generator (2), an infusion chamber (3) intended to receive a product to be infused and supplied by the said generator (2), at least one outlet (6) for dispensing the infusion, and a froth-making device (40) interposed between the said infusion chamber (3) and the said dispensing outlet (6) and comprising at least two outlet orifices (43, 44), with an adapted cross-section, disposed with respect to each other so as to create as a discharge respectively at least two jets of infusion that come into collision with each other forming froth, **characterised in that** the at least two outlet orifices (43, 44) are oriented with respect to each other at an angle of approximately 90 degrees, at least one first outlet orifice (43) being oriented vertically and at least one second outlet orifice (44) being oriented horizontally and arranged, with respect to the said first outlet orifice (43), so that the collision of the jets of infusion are situated below the said first orifice.

2. Coffee machine according to claim 1, also comprising a removable filter holder (5) comprising a cup (20) for receiving the product to be infused, and an outlet opening (23a) for the infusion, **characterised in that** the froth-making device (40) is arranged inside the filter holder (5), between the cup (20) and the outlet opening (23a) of the filter holder.

3. Coffee machine according to claim 2, in which the filter holder (5) comprises a flow pipe (23) communicating with the outlet opening (23a) and having a free end forming the infusion dispensing outlet (6), **characterised in that** the froth-making device (40) is arranged inside the pipe (23) of the filter holder (5).

4. Coffee machine according to any one of the preceding claims, **characterised in that** the froth-making device (40) comprises a body (41) in which the two outlet orifices (43, 44) are formed, the said body (41) being made in a single piece from moulded plastics material.

5. Coffee machine according to claims 3 and 4, **characterised in that** at least one seal (63; 65) is arranged between the body (41) and the internal wall of the flow pipe (23).

6. Coffee machine according to any one of the preceding claims, **characterised in that** the outlet orifices (43, 44) of the froth-making device (40) are supplied with infusion by a common collecting chamber (47).

7. Coffee machine according to any one of the preceding claims, **characterised in that** the outlet orifices (43, 44) of the froth-making device (40) open out into a jet collision chamber (48) that communicates with the dispensing outlet (6), so that the infusion flows by gravity from the said collision chamber (48) to the said dispensing outlet (6).

## Patentansprüche

1. Kaffeemaschine mit einem Heißwassererzeuger (2), einer Aufgusskammer (3), die zum Aufnehmen eines Aufgussproduktes und zum Versorgen des Erzeugers (2) bestimmt ist, wenigstens einem Verteilerausgang (6) für den Aufguss und einer Vorrichtung zum Herstellen von Schaum (40), die zwischen der Aufgusskammer (3) und dem Verteilerausgang (6) liegt und wenigstens zwei Austrittsöffnungen (43, 44) mit geeignetem Querschnitt aufweist, die relativ zueinander so angeordnet sind, dass am Austritt jeweils wenigstens zwei Aufgussstrahlen erzeugt werden, die miteinander kollidieren und dabei den Schaum bilden, **dadurch gekennzeichnet, dass** die wenigstens zwei Austrittsöffnungen (43, 44) relativ zueinander in einem Winkel von ungefähr 90° orientiert sind, wobei wenigstens eine erste Austrittsöffnung (43) vertikal und wenigstens eine zweite Austrittsöffnung (44) horizontal orientiert ist und relativ zu der ersten Austrittsöffnung (43) so angeordnet ist, dass das Aufeinandertreffen der Aufgussstrahlen unterhalb der ersten Öffnung erfolgt.

2. Kaffeemaschine nach Anspruch 1, mit ferner einem abnehmbaren Filterträger (5), der eine Kuppel (20) zum Aufnehmen eines Aufgussproduktes aufweist, und einer Ausgangsöffnung (23a) für den Aufguss, **dadurch gekennzeichnet, dass** die Vorrichtung zum Herstellen von Schaum (40) an der Innenseite des Filterträgers (5) zwischen der Kuppel (20) und der Ausgangsöffnung (23a) des Filterträgers angeordnet ist.

3. Kaffeemaschine nach Anspruch 2, wobei der Filterträger (5) ein Auslassrohr (23) aufweist, das mit der Ausgangsöffnung (23a) verbunden ist und ein freies Ende aufweist, das den Verteilerausgang (6) für den Aufguss bildet, **dadurch gekennzeichnet, dass** die Vorrichtung zum Herstellen von Schaum (40) innerhalb des Rohrs (23) des Filterträgers (5) angeordnet ist.

4. Kaffeemaschine nach einem der vorangehenden Ansprüche, **dadurch gekennzeichnet, dass** die Vorrichtung zum Erzeugen von Schaum (40) einen Körper (41) aufweist, in dem zwei Austrittsöffnungen (43, 44) ausgebildet sind, wobei der Körper (41) aus einem einzigen Kunststoff-Spritzgussteil hergestellt ist.

5. Kaffeemaschine nach den Ansprüchen 3 und 4, **dadurch gekennzeichnet, dass** wenigstens ein Dichtungselement (63; 65) zwischen dem Körper (41) und der Innenwand des Auslassrohrs (23) angeordnet ist.

6. Kaffeemaschine nach einem der vorangehenden Ansprüche, **dadurch gekennzeichnet, dass** die Austrittsöffnungen (43, 44) der Vorrichtung zum Erzeugen von Schaum (40) bei dem Aufgießen über eine gemeinsame Kammer (47) versorgt werden.

7. Kaffeemaschine nach einem der vorangehenden Ansprüche, **dadurch gekennzeichnet, dass** die Austrittsöffnungen (43, 44) der Vorrichtung zum Erzeugen von Schaum (40) in einer Strahlenkollisionskammer (48) münden, die mit dem Verteilerausgang (6) in Verbindung ist, so dass der Aufguss durch Schwerkraft von der Kollisionskammer (48) in Richtung zu dem Verteilerausgang (6) strömt.
